Europäisches Patentamt

European Patent Office

Office européen des brevets

(19)

(11) Veröffentlichungsnummer: **0 217 365**
A2

(12) # EUROPÄISCHE PATENTANMELDUNG

(21) Anmeldenummer: 86113458.3

(51) Int. Cl.⁴: **B 60 C 23/04**

(22) Anmeldetag: 01.10.86

(30) Priorität: 01.10.85 DE 3534989

(43) Veröffentlichungstag der Anmeldung:
08.04.87 Patentblatt 87/15

(84) Benannte Vertragsstaaten:
AT BE CH DE ES FR GB GR IT LI LU NL SE

(71) Anmelder: Wilde Membran Impuls Technik GmbH
Pregelstrasse
D-5828 Ennepetal(DE)

(72) Erfinder: Wilde, Horst D.
Pregelstrasse 2a
D-5828 Ennepetal(DE)

(72) Erfinder: Bonack, Armin G.
Dingshauser Strasse 50
D-5650 Solingen(DE)

(74) Vertreter: Patentanwaltsbüro Cohausz & Florack
Postfach 14 01 47
D-4000 Düsseldorf 1(DE)

(54) **Druckaufnehmer für einen luftgefüllten Fahrzeugreifen.**

(57) Die Erfindung bezieht sich auf einen Druckaufnehmer zum Messen des Luftdruckes eines luftgefüllten Fahrzeugreifens. In einem mit Gas gefüllten, gasdichten Gehäuse in Flachbauweise sind auf einer Trägerfolie 1 zwei Kontaktfelder 7, 8 angeordnet. Auf einem Kontaktfeld 7 stützt sich eine Kontaktbrücke 11 - 14 ab. Bei Überschreiten eines Grenzdruckes wird unter Verformung der Kontaktbrücke auch das zweite Kontaktfeld 8 kontaktiert. Zur Lagefixierung der Kontaktbrücke 11 - 14 und zur Bildung von Ausweichkammern 6 für aus dem Raum der Kontaktfelder 7, 8 und der Kontaktbrücke 11 - 14 bei Überschreiten des Grenzdruckes verdrängtes Gas sind zwischen den beiden äußeren Folien 1,2 strahlenförmig verlaufende Rippen 5 vorgesehen.

Fig.1

EP 0 217 365 A2

# COHAUSZ & FLORACK

## PATENTANWALTSBÜRO
### SCHUMANNSTR. 97 D-4000 DÜSSELDORF 1
Telefon: (0211) 683346 · Telefax: (0211) 6790871 · Telex: 8586513 cop d

PATENTANWÄLTE:
Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

0217365

- 1 -

29.09.1986
KN/HW 45247 EP

Wilde Membran Impulstechnik GmbH
Pregelstraße 2
5828 Ennepetal

Druckaufnehmer für einen luftgefüllten Fahrzeugreifen

Für die Fahrsicherheit eines Fahrzeuges mit luftgefüllten Reifen ist der richtige Reifendruck wichtig. Bei zu niedrigem Reifendruck erwärmt sich infolge starker Walkarbeit der Reifen übermäßig und wird dadurch stark belastet. Auch ist die Seitenführung der Reifen bei zu niedrigem Reifendruck nicht mehr optimal. Zwar kann vor einer Fahrt im Stillstand der Reifendruck überprüft werden, doch ist damit noch nicht ein ausreichender Reifendruck während der gesamten Fahrt sichergestellt, denn gerade während der Fahrt kann es infolge einer Undichtigkeit zu einem Absinken des Reifendruckes kommen. Deshalb ist es erwünscht, auch während der Fahrt den Reifendruck überwachen zu können.

Die Erfindung bezieht sich deshalb auf einen Druckaufnehmer für einen luftgefüllten Fahrzeugreifen, bei dem in einem mit Gas gefüllten Gehäuse zwei mit aus dem Gehäuse herausgeführten Leitungen verbundene Kontakte derart angeordnet sind, daß durch den auf eine nachgiebige Gehäusewand einwirkenden Luftdruck bei Überschreiten eines Grenzdruckes die Kontakte elektrisch miteinander verbunden werden.

Bei einem derartigen bekannten Druckaufnehmer (DE 26 17 448 A1) ist das Gehäuse als massiver Körper ausgebildet, in dem die beispielsweise aus einer elastischen Metallmembran bestehende nachgiebige Gehäusewand eingegossen ist. An Stelle einer einen der beiden Kontakte bildenden Metallmembran kann auch eine einen Kontakt tragende Membran aus einem nichtmetallischen Werkstoff vorgesehen sein, die zur Erzielung einer auf den zu überwachenden Druck abgestimmten Steifheit an einer im Gehäuse angeordneten Spiralfeder abgestützt ist. Der massive Körper dieses Druckaufnehmers weist eine äußere Ringnut auf, mit der er in einer passenden Ausnehmung der Felge abgedichtet sitzt. Sofern der Druckaufnehmer für Schlauchreifen verwendet wird, führt aus dem Gehäuseinneren ein Entlastungskanal in den Raum zwischen Felge und Schlauch, während bei Verwendung für einen schlauchlosen Reifen der Druckentlastungskanal entweder geschlossen ist oder in die Atmosphäre führt.

Ein solcher Druckaufnehmer ist wegen seiner besonderen Form und seines besonderen Materials nur mit hohem Aufwand herstellbar. Er hat auch ein verhältnismäßig hohes Gewicht, wodurch eine Unwucht am Fahrzeugrad verursacht wird. Schließlich ist die Einstellung des Grenzdruckes wegen der festen Verbindung der elastischen Membran mit dem Körper problematisch.

Der Erfindung liegt die Aufgabe zugrunde, einen Druckaufnehmer der eingangs genannten Art zu schaffen, der kostengünstig hergestellt werden kann, der bei flacher Bauweise ein geringes Gewicht hat und einfach am Fahrzeugrad anzubringen ist.

Diese Aufgabe wird erfindungsgemäß durch folgende Merkmale gelöst:

a) Das Gehäuse ist in Flachbauweise aus mehreren übereinandergeschichteten Lagen (1,2,3) aufgebaut, von denen die mittlere Lage (2) zur Bildung eines Gehäuseinnenraumes (4) eine Aussparung aufweist und eine den Innenraum (4) abdeckende äußere Lage (3) die nachgiebige Gehäusewand bildet.

b) Die Kontakte sind als Kontaktfelder (7,8) auf der Innenseite der die andere Gehäusewand bildenden Lage (1) geordnet.

c) Im Innenraum ist eine lagefixierte Kontaktbrücke (11-14) angeordnet, die sich auf einem der beiden Kontaktfelder (7,8) abstützt und gegenüber dem auf die die nachgiebige Gehäusewand bildende Lage (3) einwirkenden Luftdruck derart nachgiebig ist, daß sie bei Überschreiten eines Grenzdrucks auch das zweite Kontaktfeld (8) kontaktiert.

d) Im Druckaufnehmer sind außerhalb des von den Kontaktfeldern (7,8) und der Kontaktbrücke (11-14) eingenommenen Innenraumes (4) mit diesem Innenraum (4) verbundene Kammern (6) vorgesehen, in die aus dem Innenraum (4) verdrängtes Gas ausweichen kann.

Wegen des schichtweisen Aufbaues des Gehäuses aus einzelnen Lagen, insbesondere Folienmaterial läßt sich dieses mit geringem Aufwand in Flachbauweise herstellen. Das Gewicht ist entsprechend gering und liegt innerhalb der Gewichtstoleranzen des ohnehin auszuwuchtenden Fahrzeugreifens. Der Grenzdruck läßt sich über die Federkraft einstellen. Wesentlich für die Auswahl der geeigneten Feder ist die Eigenschaft, über lange Zeit eine definierte Rückstellkraft zu garantieren. Dafür sind als Federmaterial besondere Kupferlegierungen, wie Berryliumbronze, Zinnbronze und Neusilber geeignet.

Wegen der Ausweichkammer bleibt auch bei einem über dem Grenzdruck liegenden Luftdruck, der den Raum mit der Kontaktbrücke zusammendrückt, genügend nicht zusammendrückbarer Raum übrig, um das verdrängte Gas aufzunehmen, so daß die von der Kontaktbrücke bestimmte Ansprechempfindlichkeit des Druckaufnehmers nicht durch stark schwankenden Gasdruck im Gehäuse beeinträchtigt wird.

Die Kontaktfelder auf dem Träger können durch Ätzen eines kupferkaschierten Trägers insbesondere aus temperaturfestem Polyimid hergestellt werden. Vorzugsweise sind die Kontaktfelder wegen einer besseren, dauerhaften Kontaktgabe vergoldet.

Vorzugsweise bestehen auch die Abdecklage und das Distanzelement aus temperaturfestem Polyimid. Die einzelnen Polyimidlagen sollten wegen der angestrebten Gasdichtigkeit heißverklebt sein.

Nach einer zweckmäßigen Ausgestaltung der Erfindung ist das eine Kontakfeld ringförmig ausgebildet, wobei sich die Kontaktbrücke mit mehreren Federbeinen auf diesem Kontaktfeld abstützt, während der gemeinsame zentrale Teil der Federbeine dem als Insel in der Mitte des ringförmigen Kontaktfeldes ausgebildetem Konktaktfeld zugeordnet ist.

Vorzugsweise sind mehrere Kammern vorgesehen, die von als Rippen ausgebildeten, zwischen den Folien angeordneten Distanzelementen gebildet sind. Diese Rippen sollten strahlenförmig verlaufen. Auf diese Art und Weise wird gewährleistet, daß selbst bei sehr flexibler Abdeckfolie bei einem über dem Grenzdruck liegenden Luftdruck die Kammern nicht zusammengedrückt werden und in der Summe genügend Raum für das verdrängte Gasvolumen zur Verfügung steht. Diese Anordnung hat noch den weiteren Vorteil, daß die zur Gehäusemitte hinweisenden Enden der Rippe zur räumlichen Fixierung der Kontaktbrücke herangezogen werden können. Das ist dann möglich, wenn die Enden der Rippe und die freien Enden der Federbeine aneinanderstoßend angeordnet sind.

Im folgenden wird die Erfindung anhand einer ein Ausführungsbeispiel darstellenden Zeichnung näher erläutert. Im einzelnen zeigen:

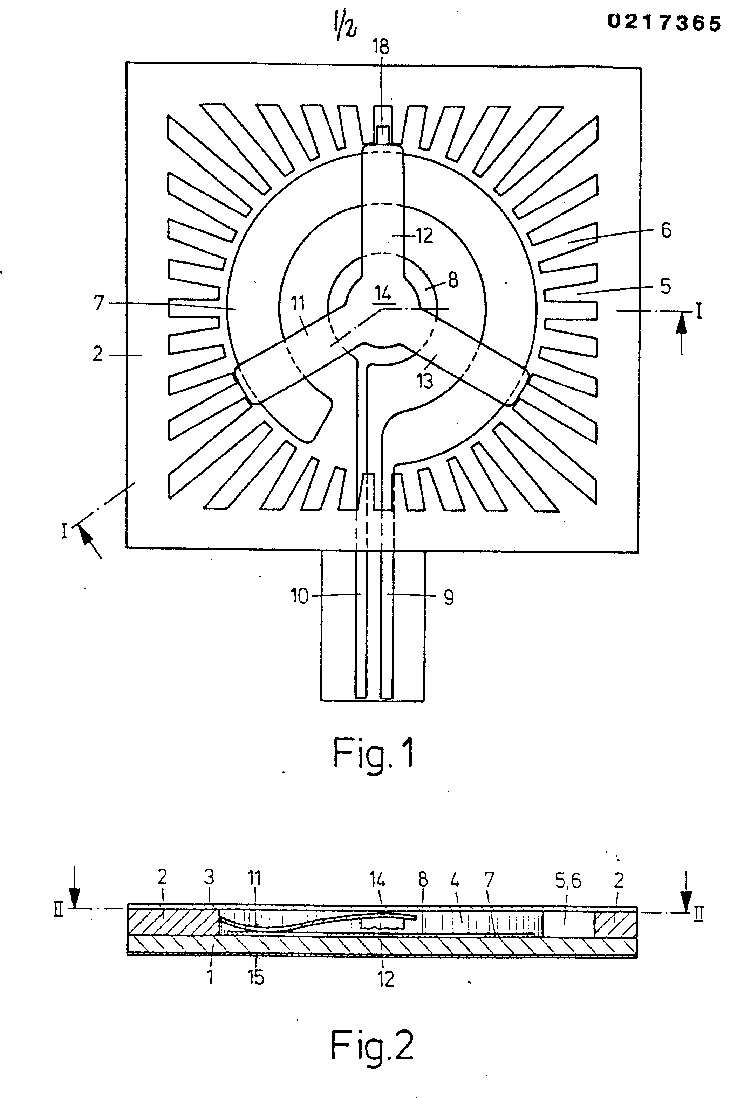

Fig. 1    Einen Druckaufnehmer in Aufsicht bei abgenommener Abdeckfolie bzw. im Querschnitt nach der Linie II - II der Fig. 2,

Fig. 2    Den Druckaufnehmer gemäß Fig. 1 im Querschnitt nach der Linie I - I der Fig. 1 u n d

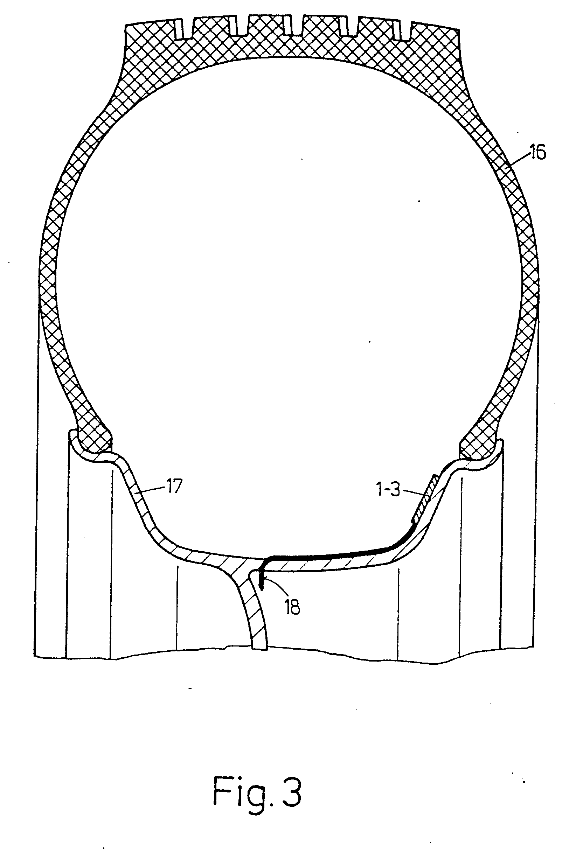

Fig. 3    Einen im Fahrzeugreifen positionierten Druckaufnehmer.

Der Druckaufnehmer hat einen Schichtaufbau aus drei temperaturfesten Polyimidfolien, und zwar einer Trägerfolie 1, einem ringförmigen Distanzelement 2 und einer Abdeckfolie 3. Diese drei Teile 1 - 3 sind miteinander heißverklebt und schließen einen mittleren Raum 4 gasdicht ein. Am inneren Rand des Distanzelementes 2 schließen sich radial nach innen gerichtete Rippen 5 an, die aus einem Stück mit dem Distanzelement 2 gestanzt sind und zwischen sich zum Raum 4 hin offene Kammern 6 bilden. Auch diese Rippen 5 sind mit den beiden Folien heißverklebt.

Die Trägerfolie 1 trägt im Bereich des Raumes 4 ein ringförmiges Kontaktfeld 7 und im Zentrum ein kreisförmiges Kontaktfeld 8. Diese aus Kupfer bestehenden Kontaktfelder 7,8 sind durch Ätzen der kupferkaschierten Folie 1 hergestellt worden und anschließend galvanisch mit einem Goldüberzug versehen wordne. Die beiden Kontaktfelder sind mit ebenfalls durch Ätzen der kupferkaschierten Folie 1 hergestellten, aus dem Gehäuse herausgeführten Leitungen 9, 10 verbunden.

In dem Raum 4 ist eine Kontaktbrücke in Form eines Dreibeines angeordnet, deren drei Federbeine 11,12,13 sich auf dem ringförmigen Kontaktfeld 7 abstützen. Der mittlere zentrale Teil 14 der Kontaktfelder ist bei fehlendem äußeren Luftdruck mit Abstand zum mittleren Kontaktfeld 8 angeordnet. Überschreitet der äußere Luftdruck den Grenzdruck, dann wird der Mittelteil 14 der Kontaktbrücke auf das zentrale Kontaktfeld 8 gedrückt und damit die elektrische Verbindung zwischen den Kontaktfeldern 7 und 8 hergestellt. Durch das dabei aus dem Raum 4 der Kontaktbrücke 11-13 in die vielen Kammern 6 verdrängte Gas steigt der Druck im Gehäuse nicht wesentlich an, so daß der Grenzdruck praktisch ausschließlich von der Kontaktbrücke 11-14 bestimmt wird.

Zum Zwecke der Lagefixierung der Kontaktbrücke 11-14 stützen sich die Enden der Federbeine 11-13 an den freien Enden der Rippen 5 ab. Damit sich die als Dreibein ausgebildete Kontaktbrücke 11-14 nicht verdreht und mit einem Bein die Anschlußleitungen 9,10 überbrückt, ist eine Drehfixierung in Form einer in eine Kammer hineinragenden Nase 18 am Ende eines Federbeines 12 angeschlossen. Andere Lagefixierungen sind aber auch denkbar, z.B. kann auch eines der Beine 11-13 an dem ringförmigen Kontaktfeld angelötet sein.

Um den Druckaufnehmer leicht montieren zu können, trägt die Trägerfolie 1 an ihrer freien Rückseite einen Selbstklebebelag 15.

Die Plazierung und Montage des Druckaufnehmers ist denkbar einfach. Vor dem Aufziehen eines Fahrzeugreifens 16 auf eine Felge 17 wird der Druckaufnehmer mit seinem Selbstklebebelag 15 an der Innenseite der Felge 17 angeklebt. Die Anschlußleitungen 9,10 werden elektrisch mit einer luftdicht durch die Felge 17 geführten Anschlußleitung 18 verbunden, die zu nicht dargestellten Schleifkontakten führt. Die nicht dargestellten zugehörigen Schleifringe sind auf einem nicht drehenden Teil der Fahrzeugachse angeordnet. Die Schleifringe ihrerseits sind mit den Leitungen einer Anzeigevorrichtung verbunden.

Beim Füllen des aufgezogenen Reifens 16 mit Luft wird der durch die Federkraft der Kontaktbrücke 11-14 vorgegebene Grenzdruck überschritten, wodurch der zentrale Teil 14 der Kontaktbrücke 11-13 auf das mittlere Kontaktfeld 8 gedrückt wird. Der elektrische Stromkreis ist dann geschlossen. Nimmt nun während der Fahrt der Luftdruck ab und fällt bis unter den Grenzdruck, dann öffnet die Kontaktbrücke wieder und löst eine Anzeige aus. Auf diese Art und Weise läßt sich der Druck des Reifens vom Fahrzeugführer während der Fahrt problemlos überwachen.

COHAUSZ & FLORACK

PATENTANWALTSBÜRO

SCHUMANNSTR. 97 D-4000 DÜSSELDORF 1

Telefon: (0211) 683346 · Telefax: (0211) 6790871 · Telex: 8586513 cop d

PATENTANWÄLTE

Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

29.09.1986
KN/SCH/HW 45247 EP

- 1 -

A n s p r ü c h e :

1. Druckaufnehmer für einen luftgefüllten Fahrzeugreifen, bei dem in einem mit Gas gefüllten Gehäuse zwei mit aus dem Gehäuse herausgeführten Leitungen verbundene Kontakte derart angeordnet sind, daß durch den auf eine nachgiebige Gehäusewand einwirkenden Luftdruck bei Überschreiten eines Grenzdruckes die Kontakte elektrisch miteinander verbunden werden,
g e k e n n z e i c h n e t   durch folgende Merkmale:

a) Das Gehäuse ist in Flachbauweise aus mehreren übereinandergeschichteten Lagen (1,2,3) aufgebaut, von denen die mittlere Lage (2) zur Bildung eines Gehäuseinnenraumes (4) eine Aussparung aufweist und eine den Innenraum (4) abdeckende äußere Lage (3) die nachgiebige Gehäusewand bildet.

b) Die Kontakte sind als Kontaktfelder (7,8) auf der Innenseite der die andere Gehäusewand bildenden Lage (1) geordnet.

c) Im Innenraum ist eine lagefixierte Kontaktbrücke (11-14) angeordnet, die sich auf einem der beiden Kontaktfelder (7,8) abstützt und gegenüber dem auf die die nachgiebige Gehäusewand bildende Lage (3) einwirkenden Luftdruck derart nachgiebig ist, daß sie bei Überschreiten eines Grenzdrucks auch das zweite Kontaktfeld (8) kontaktiert.

d) Im Druckaufnehmer sind außerhalb des von den Kontaktfeldern (7,8) und der Kontaktbrücke (11-14) eingenommenen Innenraumes (4) mit diesem Innenraum (4) verbundene Kammern (6) vorgesehen, in die aus dem Innenraum (4) verdrängtes Gas ausweichen kann.

2. Druckaufnehmer nach Anspruch 1, d a d u r c h   g e k e n n z e i c h n e t , daß die Kontaktfelder (7,8) und gegebenenfalls die Anschlußleitungen (9,10) durch Ätzen einer kupferkaschierten Lage hergestellt sind und vorzugsweise eine Goldauflage tragen.

3. Druckaufnehmer nach Anspruch 1 oder 2, d a d u r c h   g e k e n n z e i c h n e t , daß das eine Kontaktfeld (7) ringförmig ausgebildet ist und die Kontaktbrücke (11-14) sich mit mehreren Federbeinen (11-13) auf diesem Kontaktfeld (7) abstützt, und daß der gemeinsame zentrale Teil (14) der Federbeine (11-13) dem als Insel in der Mitte des ringförmigen Kontaktfeldes (7) ausgebildeten Kontaktfeld (8) zugeordnet ist.

4. Druckaufnehmer nach einem der Ansprüche 1-3, d a d u r c h   g e k e n n z e i c h n e t , daß die Kammern (6) von als Rippen ausgebildeten, zwischen den Lagen (1,3) angeordneten Distanzelementen (5) gebildet sind.

5. Druckaufnehmer nach Anspruch 4, d a d u r c h   g e k e n n z e i c h n e t , daß die Rippen (5) strahlenförmig verlaufen.

6. Druckaufnehmer nach Anspruch 5, d a d u r c h   g e k e n n z e i c h n e t , daß die zur

Gehäusemitte hinweisenden Enden der Rippen (5) und die freien Enden der Federbeine (11-13) der Kontaktbrücke (11-14) aneinanderstoßen.

7. Druckaufnehmer nach Anspruch 6, d a d u r c h   g e k e n n z e i c h n e t , daß ein Federbein (12) mit einer Nase (18) zwischen zwei Rippen (5) greift.

Fig.1

Fig.2

Fig. 3